# EUROPEAN PATENT SPECIFICATION

(11) **EP 2 647 277 B1**
(45) Date of publication and mention of the grant of the patent: **14.03.2018**
(21) Application number: 12425071.3
(22) Date of filing: 05.04.2012
(51) Int. Cl.: A01D 34/535

(54) **Flail for shredding a plant material**
Dreschflegel zum Zerkleinern von Pflanzenmaterial
Fléaux pour déchiqueter un matériau végétal

(43) Date of publication of application: 09.10.2013
(73) Proprietor: Nobili S.p.A., 40062 Molinella (Bologna) (IT)
(72) Inventor: Rossi, Mario, 40062 Molinella (Bologna) (IT)
(74) Representative: Fanzini, Valeriano

(56) References cited:
- EP-A1- 0 728 408
- EP-A1- 1 570 718
- EP-A1- 1 915 896
- DE-A1-102004 019 213
- DE-U1- 8 913 065
- GB-A- 2 034 565
- US-B1- 6 953 398

## Description

This invention relates to a shredding flail applicable to a rotor of a machine for shredding plant material.

Known in the prior art are shredding flails mounted on the rotors of agricultural machines used for shredding plant material. In these machines, the flail is pivoted in freely rotatable manner to the rotor. On account of the rotational motion of the rotor, the flail strikes the outside surface of the rotor shaft, leading to flail wear and the risk of failure.

In the event of failure, substituting the broken flail is not only a time-consuming and laborious task but also entails unwelcome expenses.

In other cases, the blows of the flail on the rotor also damage the surface of the rotor, leading to dynamic rotor imbalance and hence unwanted vibrations during use. EP 1 915 896 A1 discloses a flail element and a shaft for use on a vegetation cutting machine, such flail having added cushioning part formed from elastomeric material defined by cushioning pads attached to the flail body or a collar arranged around the same body to which they are attached by adhesive or nut and bold. This invention proposes a novel solution, alternative to the solutions known up to now, and/or, more specifically, aims to overcome one or more of the above mentioned drawbacks or problems, and/or to meet one or more of the needs felt in the trade and, more specifically, which are inferable from the above.

DE 89 130 65 U1 discloses an impact knife for ground working machines, consisting of a flail blade which is fixedly mounted on a knife shaft drivable about a horizontal axis or is pivotally mounted in the direction of its rotation, and has a cutting edge running parallel to the knife shaft. It is therefore provided a shredding flail according to claim 1

Thus, the stresses generated when the flail strikes the outside surface of the rotor are distributed over a surface which is especially provided for the purpose, thereby preventing unwanted denting of the rotor. These and other innovative aspects are set out in the appended claims and the technical features and advantages are also apparent from the detailed description which follows of a preferred advantageous embodiment of it which must be considered purely as a non-limiting example; the description being made with reference to the accompanying drawings, in which:
- Figure 1A is a perspective view of a rotor fitted with the preferred embodiment of the flail according to this invention;
- Figures 1B and 1C are transversal cross sections of the rotor, illustrating respective conditions in which the flail comes into contact with the outside surface of the rotor;
- Figure 2 is a front perspective view of the preferred embodiment of the flail according to the invention;
- Figure 3 is a rear perspective view of the preferred embodiment of the flail according to the invention;
- Figure 4 is a front plan view of the preferred embodiment of the flail according to the invention;
- Figure 5 is a rear plan view of the preferred embodiment of the flail according to the invention;
- Figure 6 is a side view of the preferred embodiment of the flail according to the invention;
- Figure 7 is a top plan view of the preferred embodiment of the flail according to the invention;
- Figure 8 is a bottom plan view of the preferred embodiment of the flail according to the invention;
- Figure 9 is a longitudinal cross section of the preferred embodiment of the flail according to the invention;
- Figure 10 is a transversal cross section along the line X-X of Figure 9;
- Figure 11 is a cross section along the line XI-XI of Figure 9;
- Figure 12 is a transversal cross section along the line XII-XII of Figure 9;
- Figure 13 is a perspective view of the pivot bush by which a flail is pivoted to the respective rotor shaft.

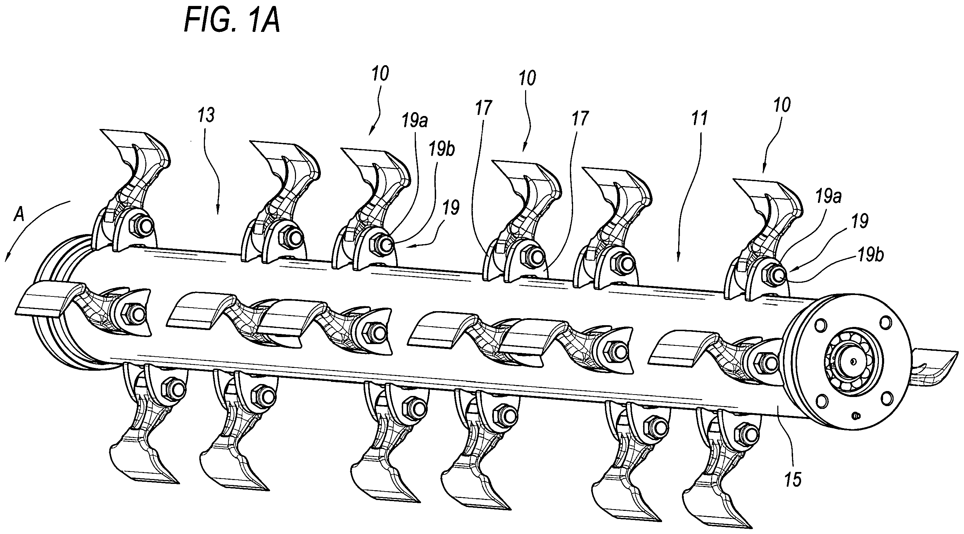

Figures 1A to 1C illustrate a rotor 11 of an agricultural machine for shredding plant material, in particular for shredding grass, fibrous or woody plants, shrubs, prunings and the like.

Although not illustrated in detail in the accompanying drawings, the rotor 11 is housed in a shredding chamber of a corresponding frame mounted on wheels or the like and towed by a respective tractor or hanging therefrom.

As illustrated, the rotor 11 comprises a respective shaft 13, which mounts, suitably positioned or distributed on its cylindrical peripheral surface 15, respective shredding flails 10 which are connected to respective pairs of connection plates or sheets 17, 17 protruding radially from the outside surface 15 of the rotor shaft and each mounting a respective pin 19 for articulation of the respective flail 10 and extending parallel to the axis of the rotor.

Each flail 10 is mounted to the rotor in such a way that it can swing freely relative to the articulation pin 19, with the respective articulated end radially spaced from the lateral surface of the rotor.

As may be inferred also from the other drawings, the flail 10 has a flail body, made of a metallic material, which comprises a transversely extended blade portion 12 for engaging and shredding the plant material and from which there extends an elongate connecting portion 14 for articulation to the rotor 11.

As illustrated, the blade portion 12 has a sharp transversal shredding end edge 16 and projects perpendicularly from the elongate connecting portion 14.

As illustrated, the blade end portion 14 has a transversely extended form, and in particular, extended symmetrically about the elongate connecting portion 14.

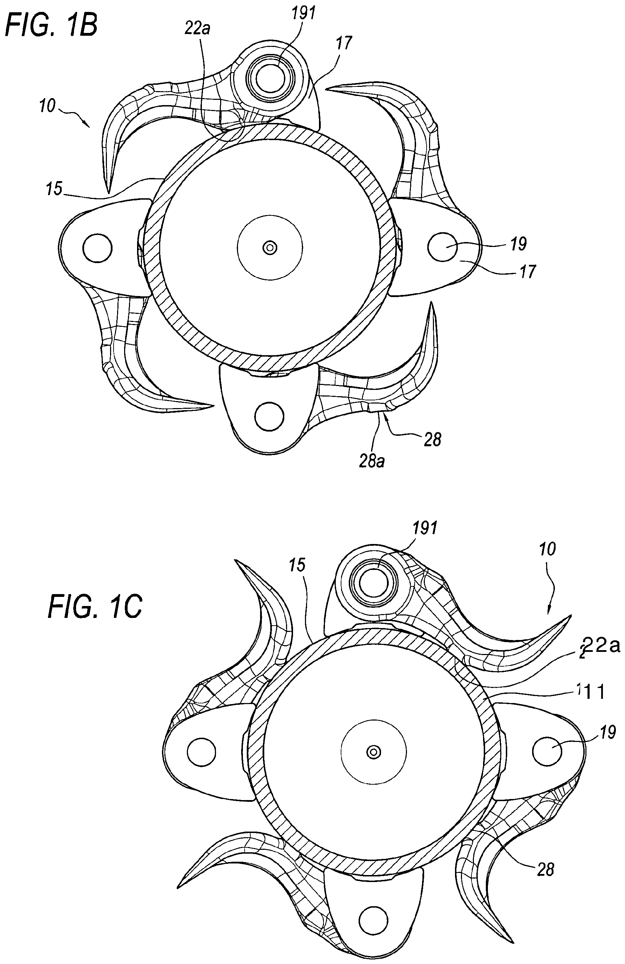

As illustrated, the flail body has a front surface which, in use, faces in the direction of rotation of the rotor, indicated by the arrow "A" in Figure 1, and a rear surface, which are labelled 10a and 10b, respectively, in the accompanying drawings.

As illustrated, the elongate connecting portion 14 has a respective enlarged end 18 for connection, or articulation, to a corresponding pin 19 of the rotor, the enlarged portion 18 being generally cylindrical in shape and defining an internal annular housing 20 for receiving the articulation pin 19.

Advantageously, the front face 10a of the flail is provided with a protuberance 22 which defines an extended contact surface 22a for striking the peripheral surface 15 of the rotor 11 shaft 13.

Thus, the stresses generated when the flail strikes the outside surface of the rotor are distributed over a surface which is especially provided for the purpose, thereby preventing unwanted denting of the rotor and/or flail failure.

More specifically, the striking protuberance 22 extends forwardly, or perpendicularly, relative to the front surface 10a of the shank portion 14 of the flail 10.

More specifically, the striking protuberance 22 extends forwardly from the articulated end portion 18.

Also, advantageously, as illustrated, the striking protuberance 22 extends longitudinally from the articulated end portion 18 along the elongate shank portion 14 of the flail.

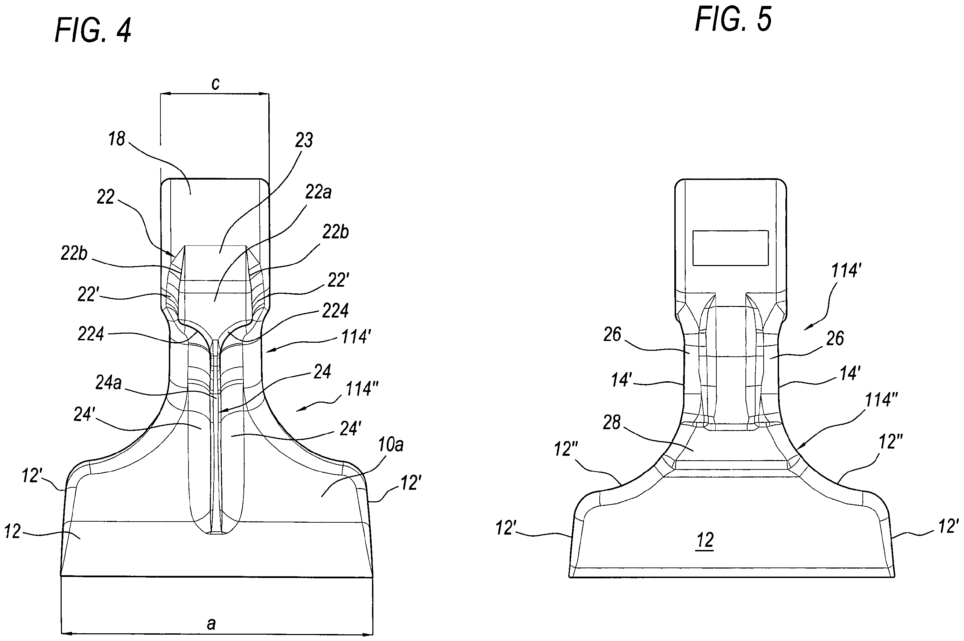

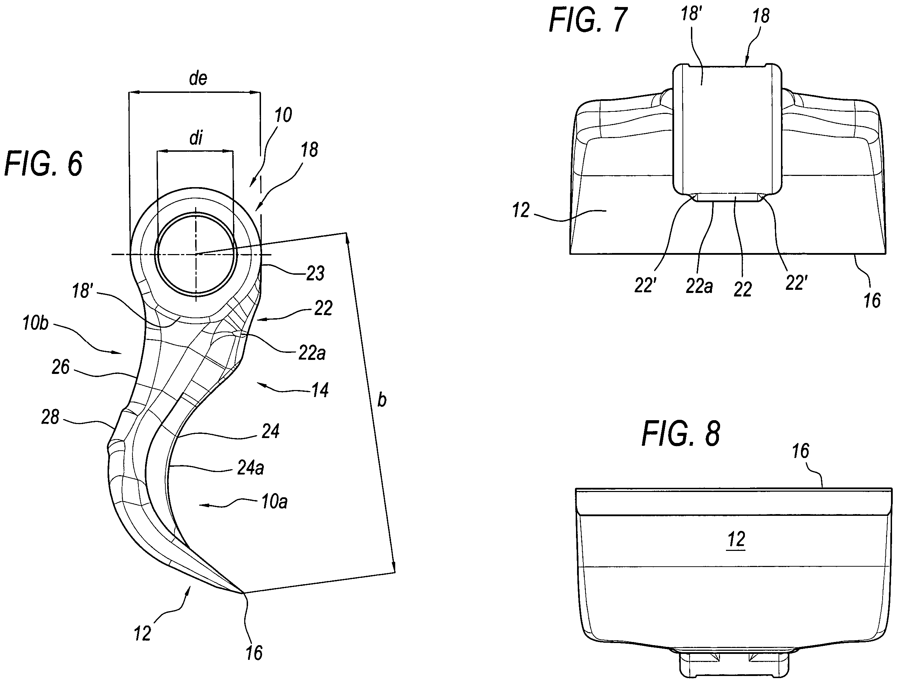

Further, as may be inferred in particular from Figures 4 and 7, the width of the striking surface 22a as a whole is greater than half the width of the respective shank portion, the width being, in particular, greater than half the width of the articulated end portion 18 which, as illustrated, has a transversal dimension that is slightly greater than the rest of the elongate shank portion 14.

In particular, as may be inferred from the drawings, the striking surface 22a extends symmetrically about the longitudinal midline of the flail.

Also, as illustrated in Figure 4, the striking surfaces 22a have opposite longitudinal lateral edges 22b, 22b, which are convergent, in particular slightly convergent, in the direction of the end edge of the articulated end of the flail 10.

As may be inferred in particular from Figure 6, the striking surface 22a is slightly arcuate, to match the profile of the corresponding outside surface 15 of the rotor 11 shaft 13.

Thus, the stresses generated when the flail strikes the outside surface of the rotor are even better distributed over the striking surface.

The striking protrusion 22, as illustrated, has opposite lateral edges 22', 22' which are inclined and which connect the corresponding front outside surface 10a of the shank portion 14 of the flail, in particular the outside surface 18' of the articulated end 18, and the corresponding adjacent portion of the shank 14.

Also, as illustrated, the perpendicular striking protrusion 22 has an inclined longitudinal surface 23, which extends upstream of the striking surface 22a towards the respective end edge of the articulated end and which connects to, or tapers towards, the corresponding outer profile, in particular, as illustrated, the substantially cylindrical profile 18' of the articulated portion 18 of the shank 14 of the flail 10.

More specifically, as illustrated, the striking protrusion 22 extends in front of the corresponding edge of the surface 18' of the articulated portion 18.

Also, the striking protrusion 22 has a perpendicular height, or thickness, which increases towards the blade end 12.

As illustrated, the flail also advantageously comprises a respective longitudinal reinforcement rib 24 which protrudes perpendicularly and which preferably extends at the centre line of the flail 10.

As illustrated, in particular in Figure 6, the striking surface 22a extends forwardly, or perpendicularly, beyond the front end edge of the longitudinal reinforcement rib 24, that is to say, it protrudes perpendicularly with respect to the longitudinal reinforcement rib 24.

In the accompanying drawings, the front end edge of the longitudinal reinforcement rib 24 is labelled 24a.

Advantageously, as illustrated, the reinforcement rib 24 extends on the shank portion 14 of the flail 10, in particular as far as blade portion 12 of the flail.

The upper edge 24a longitudinal reinforcement rib 24 tapers with the front face of the blade portion 12.

Advantageously, as illustrated, the reinforcement rib 24 extends longitudinally from the striking protuberance 22.

In practice, the upstream end of the reinforcement rib 24 extends from the transversal face of the striking protuberance 22, which faces towards the blade end 12 of the flail 10.

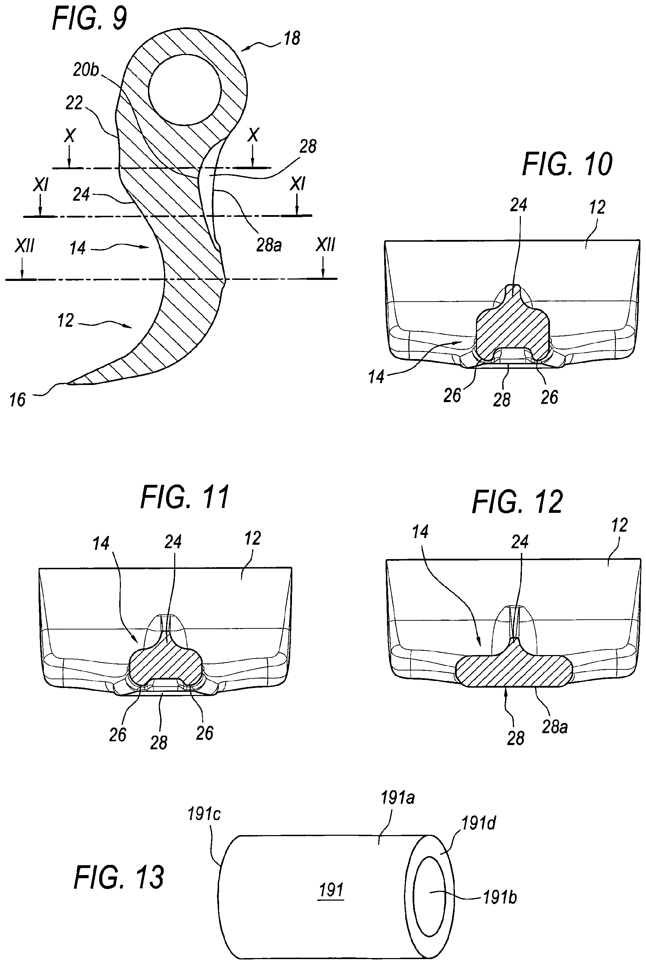

As illustrated, in particular in Figures 6 and 9, the reinforcement rib 24 has a front, or upper, arcuate profile 24a, which follows the profile of the front face 10a of the shank portion 14 of the flail 10.

As illustrated in Figure 4, the reinforcement rib 24 has opposite lateral faces 24', 24' which are arcuate, tapering towards the free edge of the rib 24, and which connect the rib 24 to the front face 10a of the body of the flail 10.

The longitudinal reinforcement rib 24 connects with the striking protuberance 22 through corresponding arcuate portions 224 which extend transversely on both sides of the longitudinal reinforcement rib 24, which have a corresponding transversal arcuate form and which taper towards the longitudinal reinforcement rib 24.

As illustrated, the longitudinal rib 24 has a respective thickness, or width, which is substantially constant, or uniform, along the entire longitudinal extension of the reinforcement rib 24 itself.

More specifically, the longitudinal reinforcement rib 24 extends for the entire longitudinal extension of the corresponding shank portion 14 and for at least half of, and more specifically, for a length greater than half the longitudinal extension of, the corresponding blade portion 12 of the flail 10.

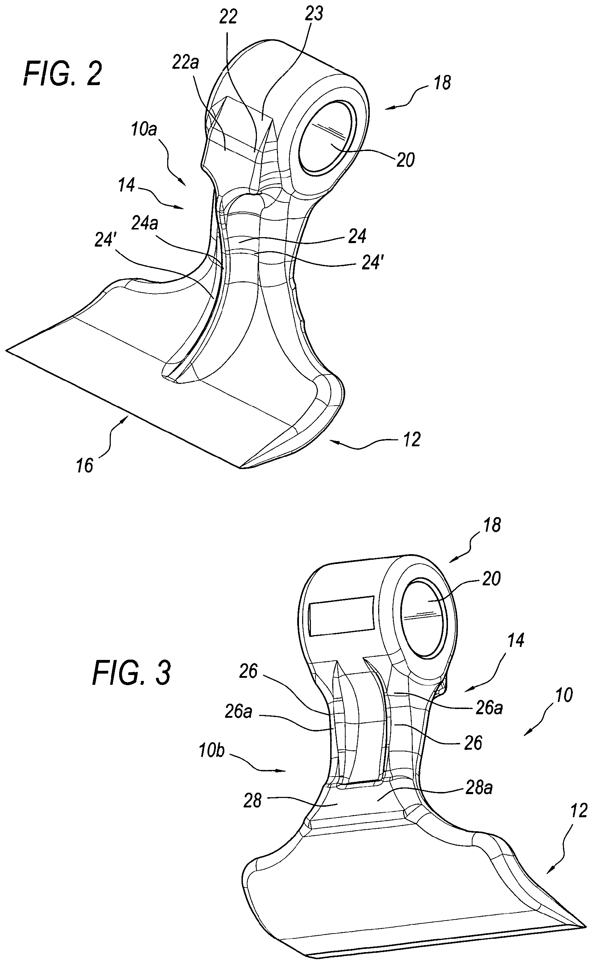

Advantageously, as may be inferred in particular from Figures 3, 5 and 9, the flail 10, and more specifically the shank portion 14 of the flail, has at the back of it a first and a second longitudinal reinforcement rib 26, 26.

As illustrated, the first and second longitudinal reinforcement ribs 26, 26 at the back are positioned laterally relative to the central reinforcement rib 24 at the front.

More specifically, the first and second longitudinal reinforcement ribs 26, 26 are positioned symmetrically about the longitudinal midline of the flail.

More specifically, the first and second rear longitudinal reinforcement ribs 26, 26 extend at the lateral longitudinal edge of the respective shank portion 14.

As illustrated, the rear longitudinal reinforcement ribs 26, 26 extend from the articulated portion 18 of the shank 14.

More specifically, the rear longitudinal reinforcement ribs 26, 26 extend from the articulation portion 18 along the shank portion 14, and in particular, substantially for the entire length of the central portion 114', with parallel or substantially parallel sides, of the shank portion 14.

In practice, as illustrated, the shank portion has a main central portion 114', with parallel or substantially parallel sides, and an end portion 114" for connection to the blade portion, with diverging lateral edges which connect with the rear transversal edges 12", 12" of the blade portion 12.

Advantageously, as may be inferred from Figures 3, 4 and 6, the flail has at the back of it a protrusion 28 defining an extended surface 28a for striking the peripheral surface 15 of the rotor 11 shaft 13.

This rear protrusion is in the form of a transversely extended reinforcement rib 28.

The rear protrusion or transversely extended rib 28 extends at the zone 114" of connection to the blade portion 12, having in particular a lower edge near the rear transversal end edges 12", 12" of the blade portion 12.

In practice, the rear protrusion or transversely extended rib 28 extends at or near the blade portion 12 of the flail 10.

As illustrated, advantageously, the rear protrusion or transversely extended rib 28 extends on the shank portion 14 of the flail, in particular for the entire width of the corresponding zone, in particular for the entire width of the end portion 114" of the shank portion 14.

In practice, the rear protrusion or transversely extended rib 28 extends for the entire extension of the corresponding portion 114" of the shank of the flail and its respective end edges coincide with the corresponding lateral edges of the corresponding shank portion 14 of the flail.

The respective or corresponding rear longitudinal reinforcement rib 26 extends at the rear protrusion or transversal rib 28.

More specifically, the corresponding rear longitudinal reinforcement rib 26 has a respective rear edge 26a which tapers towards the rear edge 28a of the transversal reinforcement rib 28.

As may be inferred in particular from Figure 9, each rear longitudinal rib 26 has a respective profile which is less arcuate than the arcuate profile of the rear face 10b of the shank portion 14 of the flail.

Advantageously, the transversal reinforcement rib 28 has a respective rear edge or face 28a which is shaped to match the profile of the corresponding outside surface 15 of the rotor shaft.

The corresponding rear longitudinal rib 26 has a transversal cross section which is generally semi-circular in shape.

Each rear longitudinal rib connects laterally with the corresponding lateral edge of the shank portion 14 of the flail.

The width of the rear longitudinal ribs 26, 26 as a whole is substantially equal to or greater than the width of the corresponding shank portion 14 of the flail 10.

As illustrated, the blade portion 12 has an arcuate profile which is perpendicularly extended relative to the longitudinal shank portion 14 of the flail.

The blade portion 12 has a longitudinal profile which is tapered in the direction of the cutting end or transversal cutting edge 16.

As illustrated, the shank 14 of the flail has an enlarged profile, in particular, slightly enlarged at the articulation zone 18.

Also, the shank portion 14 of the flail has a main central zone whose longitudinal lateral edges 14', 14' are parallel or substantially parallel to each other.

As illustrated, the blade portion 12 of the flail has respective longitudinal lateral edges 12', 12' which are divergent, in particular, slightly divergent, towards the free end 16 of the blade portion 12.

As illustrated, the blade portion 12 of the flail also has upstream, or rear, transversal edges 12", 12" which are arcuate and which connect with the lateral edges of the lower portion 114" of the shank 14, which in turn connect to the lateral edges 14', 14' of the central portion of the shank 14 of the flail 10.

As illustrated, the sharp cutting edge 16 extends parallel to the axis of rotation, that is, to the housing 20 for receiving the rotor shaft articulation pin.

More specifically, the rear transversal rib 28 extends at the bottom of the shank portion 14 and at the bottom 114" thereof, these having respective arcuate edges connecting to the transversal edges 12" of the blade portion 12.

As illustrated, each rear longitudinal reinforcement rib 26, 26 defines a height, or thickness, of the corresponding shank portion 114', which varies lengthways starting from a maximum at the articulation portion 18 up to a minimum at the protruding transversal rib 28.

Advantageously, in this preferred embodiment of the flail, the maximum width "a" of the cutting edge is between 93 mm and 97 mm, preferably equal or substantially equal to 95 mm, and the distance "b" of the cutting edge from the centre of rotation of the flail is between 98 mm and 102 mm, preferably equal or substantially equal to 100 mm.

Further, the width "c" of the connection, or articulation, block 18 is between 31 mm and 35 mm, preferably equal or substantially equal to 33 mm. The diameter "de" of the articulation portion 18 is between 37 mm and 41 mm, preferably equal or substantially equal to 39 mm.

Further, the inside diameter "di" of the connection, or articulation, block is preferably equal or substantially equal to 22.5 mm.

To reduce flail wear, a pivot or rotation bush 191 is provided which is inserted into the tubular connection, or articulation, block 18 of the flail and which is designed to be engaged by the corresponding rotor shaft connection plates 17, 17.

As may be inferred from Figure 13, the bush 191 has an outside cylindrical surface 191a for the sliding of the inside cylindrical surface 20 of the articulation portion 18 of the flail, an inside cylindrical surface 191b into which a respective articulation pin is inserted, and opposite end edges 191c, 191d by which the bush is engaged and retained by the radial connection plates 17, 17.

The lateral edges 191c, 191d of the bush 191 define engagement means for the connection plates 17, 17 which are tightened to each other in abutment against the selfsame lateral edges 191c, 191d of the bush 191.

The connection plates 17, 17 protrude radially and are welded to the outside surface 15 of the tubular rotor shaft and are able to bend slightly towards each other. In practice, the radial connection plates 17, 17 are tightened against the bush 191 so that the respective inside surface comes into contact with the lateral edge 191c, 191d of the bush 191, which is slightly larger than the articulation portion 18.

The connection plates 17, 17 are tightened by a nut 19a and a bolt, whose shank 19b is inserted into the bush 191.

In practice, the bolt 19b is inserted into holes in the connection plates 17, 17 which are transversal or parallel to the rotor axis. The head of the bolt remains outside one connection plate whilst the opposite end of the shank is engaged by the nut 19a on the outside of the other connection plate 17.

The invention described above is susceptible of industrial application. Moreover, it will be understood that all the details of the invention are included in the appended claims.

## Claims

1. A shredding flail (10) applicable to a rotor (11) of a machine for shredding plant material, as grass, fibrous or woody plants, shrubs, prunings and the like; the flail (10) having a flail body, in metallic material, comprising a transversely extended blade portion (12) for shredding the material and an elongate shank portion (14) for articulated connection to the rotor (11), the flail body having a front surface (10a) which, in use, faces in the direction of rotation of the rotor, and a rear surface, (10b); **characterized in that** the front face (10a) of the flail is provided with a protuberance (22) which defines an extended surface (22a) for striking the peripheral surface (15) of the rotor (11) shaft (13); **in that** the striking protuberance (22) extends forwardly, or perpendicularly, relative to the front surface (10a) of the shank portion of the flail (10); **in that** said striking protuberance (22) extends forwardly from the articulated end portion (18) of the shank portion (14); **in that** the width of the striking surface (22a) as a whole is greater than half the width of the respective shank portion; and **in that** the striking surface (22a) is slightly arcuate to match the profile of the corresponding outside surface (15) of the rotor (11) shaft (13).

2. The flail according to claim 1, **characterized in that** it comprises a longitudinal reinforcement rib (24) which protrudes perpendicularly and which, in particular, extends, at the centre line of the flail (10); and **in that** the reinforcement rib (24) extends longitudinally from the striking protuberance (22).

3. The flail according to any of the foregoing claims, **characterized in that** the flail (10) has at the back of it a first and a second longitudinal reinforcement rib (26, 26).

4. The flail according to claim 3, **characterized in that** the first and second rear longitudinal reinforcement ribs (26, 26) extend at the longitudinal edge of the shank portion (14) and extend from the articulation portion (18) of the shank portion (14) along the shank portion (14).

5. The flail according to any of the preceding claims, **characterized in that** it comprises at the back of it a protrusion (28) defining an extended surface (28a) for striking the peripheral surface (15) of the rotor (11) shaft (13).

6. The flail according to claim 5, **characterized in that** the rear protrusion (28) is in the form of a transversely extended rib (28).

7. The flail according to claim 5 or 6, **characterized in that** the rear protrusion or transversely extended rib (28) has a respective rear face (28a) which is shaped to match the profile of the corresponding outside surface (15) of the rotor shaft.

8. The flail according to any of the claims from 5 to 7, **characterized in that** the rear protrusion or transversely extended rib (28) extends on the shank portion (14) of the flail at or near the blade portion (12) of the flail (10).

9. The flail according to any of the claims from 5 to 8, **characterized in that** rear protrusion or transversely extended rib (28) extends for the entire extension of the corresponding shank portion (14) of the flail.

10. The flail according to any of the claims from 3 to 9, **characterized in that** each rear longitudinal rib (26) has a transversal cross section which is generally semi-circular in shape.

11. The flail according to any of the preceding claims, **characterized in that** the blade portion (12) has an arcuate profile which is perpendicularly extended relative to the longitudinal shank portion (14).

12. The flail according to any of the preceding claims, **characterized in that** the shank (14) of the flail has an enlarged profile at the articulation zone (18) and a respective central portion whose lateral edges are parallel, or substantially parallel.

13. The flail according to any of the preceding claims, **characterized in that** it comprises a flail pivot or rotation bush (191) which is inserted into the connection, or articulation, block (18) of the flail and which is designed to be engaged by the corresponding rotor shaft connection plates (17, 17).

14. The flail according to any of the preceding claims, **characterized in that** the maximum width (a) of the cutting edge of the flail is between 93 mm and 97 mm, preferably equal to 95 mm, the distance (b) of the cutting edge from the centre of rotation of the flail is between 98 mm and 102 mm, preferably equal to 100 mm, the width (c) of the connection, or articulation, block is between 31 mm and 35 mm, preferably equal to 33 mm, and the inside diameter (di) of the connection, or articulation, block is preferably equal or substantially equal to 22.5 mm.

## Patentansprüche

1. Dreschflegel (10) zum Zerkleinern, der an einem Rotor (11) einer Maschine zum Zerkleinern von Pflanzenmaterial, wie Grass, faserige foder holzige Pflanzen, Sträucher, Beschneidungen und dergleichen angebracht werden kann; wobei der Dreschflegel (10) einen Dreschflegelkörper aus metallischem Werkstoff, umfassend einen sich transversal erstreckenden Klingeabschnitt (12) zum Zerkleinern des Materials und einen länglichen Schaftabschnitt (14) für die gelenkige Verbindung zum Rotor (11) aufweist, wobei der Dreschflegelkörper eine vordere Oberfläche (10a), die während des Betriebes, der Drehrichtung dem Rotor zugewandt ist und eine Rückfläche (10b) aufweist; **dadurch gekennzeichnet, dass** die Vorderseite (10a) des Dreschflegels mit einem Vorsprung (22) versehen ist, der eine erweiterte Oberfläche (22a) zum Schlagen der Umfangsfläche (15) der Welle (13) des Rotors (11) definiert; dass der Schlagvorsprung (22) sich vorwärts oder senkrecht, in Bezug auf die vordere Oberfläche (10a) des Schaftabschnitts des Dreschflegels (10) erstreckt; dass der Schlagvorsprung (22) sich vorwärts vom gelenkigen Endabschnitt (18) des Schaftabschnitts (14) erstreckt; dass die Breite der Schlagfläche (22a) als Ganzes grösser als die Hälfte der Breite des jeweiligen Schaftabschnitts ist; und dass die Schlagfläche (22a) leicht bogenförmig ist, um mit dem Profil der entsprechenden Aussenfläche (15) der Welle (13) des Rotors (11) übereinzustimmen.

2. Dreschflegel nach Anspruch 1, **dadurch gekennzeichnet, dass** er eine Längsverstärkungsrippe (24) umfasst, die senkrecht vorspringt und die sich insbesondere an der Mittellinie des Dreschflegels (10) erstreckt; und dass sich die Verstärkungsrippe (24) in Längsrichtung vom Schlagvorsprung (22) erstreckt.

3. Dreschflegel nach einem der vorhergehenden Ansprüche, **dadurch gekennzeichnet, dass** der Dreschflegel (10) an seiner Rückseite eine erste und eine zweite Längsverstärkungsrippe (26, 26) aufweist.

4. Dreschflegel nach Anspruch 3, **dadurch gekennzeichnet, dass** sich die erste und die zweite hintere Längsverstärkungsrippe (26, 26) an der Längskante des Schaftabschnitts (14) erstrecken und sich vom Gelenkabschnitt (18) des Schaftabschnitts (14) entlang des Schaftabschnitts (14) erstrecken.

5. Dreschflegel nach einem der vorhergehenden Ansprüche, **dadurch gekennzeichnet, dass** er an seiner Rückseite einen Vorsprung (28) umfasst, der eine erweiterte Oberfläche (28a) zum Schlagen der Umfangsfläche (15) der Welle (13) des Rotors (11) definiert.

6. Dreschflegel nach Anspruch 5, **dadurch gekennzeichnet, dass** der hintere Vorsprung (28) die Form einer sich transversal erstreckenden Rippe (28) aufweist.

7. Dreschflegel nach Anspruch 5 oder 6, **dadurch gekennzeichnet, dass** der hintere Vorsprung oder die sich transversal erstreckende Rippe (28) eine entsprechende hintere Fläche (28a) aufweist, die so geformt ist, dass sie mit dem Profil der entsprechenden Aussenfläche (15) der Rotorwelle übereinstimmt.

8. Dreschflegel nach einem der Ansprüche 5 bis 7, **dadurch gekennzeichnet, dass** sich der hintere Vorsprung oder die sich transversal erstreckende Rippe (28) am Schaftabschnitt (14) des Dreschflegels an oder nahe dem Schaufelabschnitt (12) des Dreschflegels (10) erstreckt.

9. Dreschflegel nach einem der Ansprüche 5 bis 8, **dadurch gekennzeichnet, dass** sich der hintere Vorsprung oder die sich transversal erstreckende Rippe (28) über die gesamte Erweiterung des entsprechenden Schaftabschnitts (14) des Dreschflegels erstreckt.

10. Dreschflegel nach einem der Ansprüche 3 bis 9, **dadurch gekennzeichnet, dass** jede hintere Längsrippe (26) einen transversalen Querschnitt aufweist, der im wesentlichen halbkreisförmig ist.

11. Dreschflegel nach einem der vorhergehenden Ansprüche, **dadurch gekennzeichnet, dass** der Schaufelabschnitt (12) ein bogenförmiges Profil aufweist, das sich in Bezug auf den Längsschaftabschnitt (14) senkrecht erstreckt.

12. Dreschflegel nach einem der vorhergehenden Ansprüche, **dadurch gekennzeichnet, dass** der Schaft (14) des Dreschflegels an der Gelenkzone (18) ein vergrößertes Profil und einen entsprechenden Mittelabschnitt aufweist, dessen seitliche Kanten parallel oder im Wesentlichen parallel sind.

13. Dreschflegel nach einem der vorhergehenden Ansprüche, **dadurch gekennzeichnet, dass** er einen Dreschflegeldrehpunkt oder Rotationsbuchse (191) aufweist, die in den Verbindungs - oder Gelenkblock (18) des Dreschflegels eingesetzt ist und der ausgelegt ist, um von den entsprechenden Rotorwellenverbindungsplatten (17, 17) eingegriffen zu werden.

14. Dreschflegel nach einem der vorhergehenden Ansprüche, **dadurch gekennzeichnet, dass** die maximale Breite (a) der Schneidkante des Dreschflegels zwischen 93 mm und 97 mm, vorzugsweise gleich 95 mm ist, der Abstand (b) der Schneidkante vom Rotationsmittelpunkt des Dreschflegels zwischen 98 mm und 102 mm, vorzugsweise gleich 100 mm ist, die Breite (c) des Verbindungs- oder Gelenkblocks zwischen 31 mm und 35 mm, vorzugsweise gleich 33 mm ist, und der Innendurchmesser (di) des Verbindungs- oder des Gelenkblocks vorzugsweise gleich oder im Wesentlichen gleich 22,5 mm ist.

## Revendications

1. Fléau à débroussailler (10) applicable à un rotor (11) d'une machine servant à débroussailler du matériau végétal telle que de l'herbe, des plantes fibreuses ou ligneuses, des buissons, des résidus de taille et similaire ; le fléau (10) comportant un corps de fléau en matériau métallique comprenant une partie de lame (12) se prolongeant transversalement pour débroussailler le matériau et une partie de queue allongée (14) pour le raccordement articulé au rotor (11), le corps de fléau comportant une surface frontale (10a) qui, en fonctionnement, s'oriente dans la direction de rotation du rotor, et une surface postérieure (10b) ; **caractérisé en ce que** le côté frontal (10a) du fléau est pourvu d'une saillie (22) définissant une surface étendue (22a) pour frapper la surface périphérique (15) de l'arbre (13) rotor (11) ; **en ce que** la saillie de frappe (22) se prolonge vers l'avant, ou perpendiculairement, par rapport à la surface frontale (10a) de la partie de queue du fléau (10) ; **en ce que** ladite saillie de frappe (22) se prolonge vers l'avant à partir de la partie terminale articulée (18) de la partie de queue (14) ; **en ce que** la largeur de la surface de frappe (22a) dans son ensemble est supérieure à la moitié de la largeur de la partie de queue respective ; et **en ce que** la surface de frappe (22a) est légèrement arquée pour correspondre au profil de la surface extérieure (15) correspondante de l'arbre (13) rotor (11).

2. Fléau selon la revendication 1, **caractérisé en ce qu'**il comprend une nervure longitudinale de renforcement (24) qui dépasse perpendiculairement et qui, en particulier, se prolonge en correspondance de la ligne centrale du fléau (10) ; et **en ce que** la nervure de renforcement (24) se prolonge longitudinalement de la saillie de frappe (22).

3. Fléau selon l'une quelconque des revendications précédentes, **caractérisé en ce que** le fléau (10) comporte à l'arrière de celui-ci une première et une seconde nervure longitudinale de renforcement (26, 26).

4. Fléau selon la revendication 3, **caractérisé en ce que** les première et seconde rainures longitudinales de renforcement (26, 26) se prolongent en correspondance du bord longitudinal de la partie de queue (14) et se prolongent de la partie d'articulation (18) de la partie de queue (14) le long de la partie de queue (14).

5. Fléau selon l'une quelconque des revendications précédentes, **caractérisé en ce qu'**il comprend à l'arrière de celui-ci une protubérance (28) définissant une surface étendue (28a) pour frapper la surface périphérique (15) de l'arbre (13) rotor (11).

6. Fléau selon la revendication 5, **caractérisé en ce que** la protubérance postérieure (28) a la forme d'une nervure (28) se prolongeant transversalement.

7. Fléau selon la revendication 5 ou 6, **caractérisé en ce que** la protubérance postérieure ou rainure se prolongeant transversalement (28) comporte un côté postérieur (28a) respectif étant façonné pour correspondre au profil de la surface extérieure (15) correspondante de l'arbre rotor.

8. Fléau selon l'une quelconque des revendications de 5 à 7, **caractérisé en ce que** la protubérance postérieure ou rainure se prolongeant transversalement (28) se prolonge sur la partie de queue (14) du fléau en correspondance ou à proximité de la partie de lame (12) du fléau (10).

9. Fléau selon l'une quelconque des revendications de 5 à 8, **caractérisé en ce que** la protubérance postérieure ou rainure se prolongeant transversalement (28) se prolonge sur toute l'extension de la partie de queue (14) correspondante du fléau.

10. Fléau selon l'une quelconque des revendications de 3 à 9, **caractérisé en ce que** chaque rainure longitudinale postérieure (26) comporte une section transversale ayant une forme généralement semi-circulaire.

11. Fléau selon l'une quelconque des revendications précédentes, **caractérisé en ce que** la partie de lame (12) comporte un profil arqué pouvant se prolonger perpendiculairement par rapport à la partie de queue longitudinale (14).

12. Fléau selon l'une quelconque des revendications précédentes, **caractérisé en ce que** la queue (14) du fléau possède un profil élargi en correspondance de la zone d'articulation (18) et une partie centrale respective dont les bords latéraux sont parallèles ou substantiellement parallèles.

13. Fléau selon l'une quelconque des revendications précédentes, **caractérisé en ce qu'**il comprend un pivot de fléau ou douille de rotation (191) étant inséré dans le bloc (18) de raccordement ou d'articulation du fléau et étant conçu pour se mettre en prise avec les plaques de raccordement (17, 17) correspondantes de l'arbre rotor.

14. Fléau selon l'une quelconque des revendications précédentes, **caractérisé en ce que** la largeur maximum (a) du bord de coupe du fléau est comprise entre 93 et 97 mm, de préférence égale à 95 mm, la distance (b) du bord de coupe à partir du centre de rotation du fléau est comprise entre 98 et 102 mm, de préférence égale à 100 mm, la largeur (c) du bloc de raccordement ou d'articulation est comprise entre 31 et 35 mm, de préférence égale à 33 mm, et le diamètre intérieur (di) du bloc de raccordement ou d'articulation est de préférence égal ou substantiellement égal à 22,5 mm.
